# EUROPEAN PATENT APPLICATION

(11) **EP 1 679 504 A1**
(43) Date of publication of application: **12.07.2006**
(21) Application number: 04793072.2
(22) Date of filing: 21.10.2004
(51) Int. Cl.: G01N 21/95, G11B 7/26

(54) **APPEARANCE INSPECTOR**

(30) Priority: 27.10.2003 JP 2003365858
(71) Applicant: Sony Disc and Digital Solutions Inc., Tokyo 1410001 (JP)
(72) Inventor: NOJIMA, K., c/o Sony Disc & Digital Solutions Inc., Tokyo 141-0001 (JP)
(74) Representative: Melzer, Wolfgang
(86) International application number: PCT/JP2004/015960
(87) International publication number: WO 2005/040775

(57) **Abstract**

A beam emitted from a light source 58 is converted into a line-shaped collimated beam by a lens 59. The line-shaped collimated beam reaches a beam splitter 60. The beam splitter 60 reflects a half of the incident beam. The reflected beam vertically reaches a line-shaped area of a front surface of an optical disc 65. The beam splitter 60 transmits the remaining beam. The transmitted beam obliquely reaches the line-shaped area of the front surface of the optical disc 65. The light amount of the reflected beam that vertically reaches the front surface of the optical disc 65 is detected by a first camera 62. Since both the incident beam and the reflected beam are perpendicular to the front surface of the optical disc 65, even if a large defect exists on the front surface, no virtual image occurs in an image photographed by a first camera 62. As a result, the size of the defect can be accurately detected.

## Description

### Technical Field

The present invention relates to a visual inspection apparatus that inspects a defect on a front surface or the inside of an optical disc.

### Background Art

In recent years, optical discs such as CDs (Compact Discs) and DVDs (Digital Versatile Discs) have been widespread. It is becoming important for their makers to properly and effectively control the quality of these optical discs. As one of such quality control, there is visual inspection that inspects microscopic defects that exist on manufactured optical discs. These makers are performing such visual inspection for all optical discs.

Microscopic defects on an optical disc for examples a DVD may occur in various manufacturing processes such as a record pit forming process, a spattering process, an adhering process, and so forth. These defects include dust, spats of an adhesive agent, and so forth on an information reading surface of a disc and microscopic bumps, an oil component, foam, and so forth on a reflection surface of the disc.

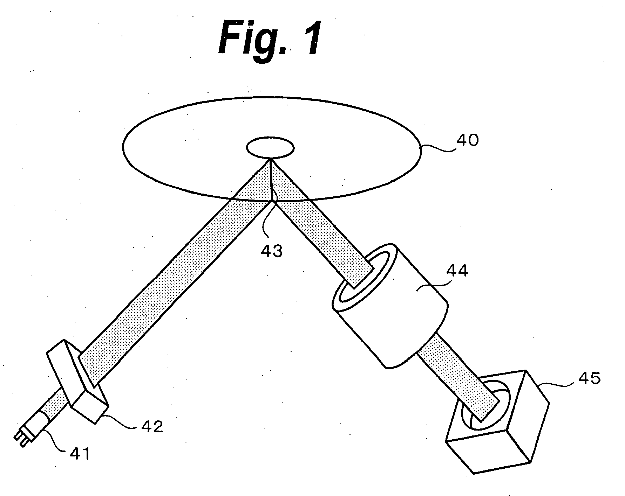

A visual inspection apparatus that performs a visual inspection normally uses a high resolution CCD (Charge Coupled Device) camera. Fig. 1 shows the theory of a visual inspection apparatus. Reference numeral 40 denotes an optical disc as an inspection object. A beam emitted from a light source 41 is converted into a line-shaped beam by a lens device 42. A line-shaped beam emits a line-shaped area 43 as an inspection area of the optical disc 40. A beam reflected on the optical disc 40 is received by a line CCD 45 through a camera lens 44. The line CCD 45 is composed of one row of sensor elements of a light reception portion. In the following description, it is assumed that a camera is used as the line CCD. The line CCD and the camera each function as an image sensor that receive a beam reflected from an optical disc and converts the received beam into an electric signal.

After one line-shaped area 43 of the optical disc 40 is photographed by the line CCD 45, the optical disc 40 is slightly rotated. These processes are repeated for one turn of the optical disc 40. As a result, the whole disc is photographed. Thus, the whole disc can be visually inspected. Since the reflectance of a beam from a defect portion is lower or higher than that of a normal portion, a defect can be detected at a dark or bright portion in a photographed image

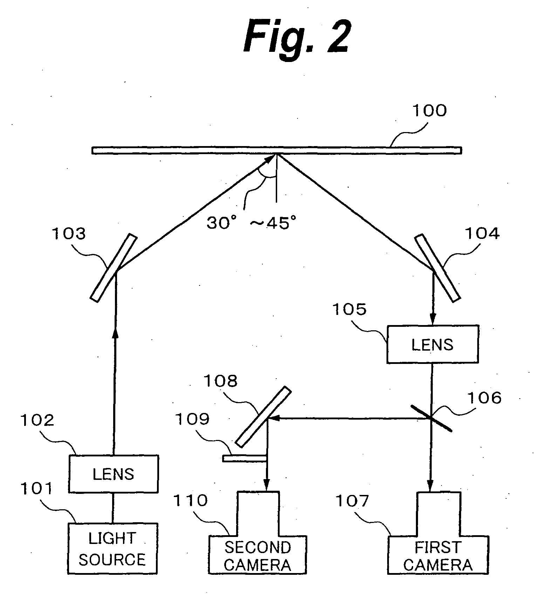

This visual inspection apparatus can be applied to a Blu-ray Disc (hereinafter, abbreviated as BD) standard optical disc, which is a next-generation optical disc. With reference to Fig. 2, a structure of a conventional visual inspection apparatus that visually inspects such an optical disc will be described.

The visual inspection apparatus shown in Fig. 2 has a light source 101, lenses 102 and 105, mirrors 103, 104, 108, a beam splitter 106, an aperture 109, a first camera 107, and a second camera 110.

The light source 101 is composed of for example a halogen lamp or a red LED (Light Emitting Diode). A beam emitted from the light source 101 reaches the lens 102. The lens 102 emits a line-shaped nearly-collimated beam. The nearly collimated beam is emitted to one line-shaped area in the radius direction of a BD standard optical disc 100 through the mirror 103.

The mirror 104 changes the direction of the beam reflected from the optical disc 100. The beam reflected by the mirror 104 reaches the lens 105. The incident angle and the reflection angle of the beam to and from the optical disc 100 are for example in the range from 30° to 45°. The mirror is generally a plane mirror that bends the optical axis of a beam (hereinafter, this definition applies to mirrors described in this specification). The beam passes through the lens 105 and travels to the beam splitter 106. The beam splitter 106 splits the beam into a beam that travels to the first camera 107 and a beam that travels to the second camera 108. The line-shaped beam that has traveled to the first camera 107 is received by a line CCD of the first camera 107. The line CCD of the first camera 107 detect the light amount of the beam.

On the other hand, the line-shaped beam that has traveled to the mirror 108 is received by the second camera 110 through the aperture 109. The first camera 107 and the second camera 110 relatively darkly or brightly photograph a defect portion. This is because a beam reflected from a defect portion is absorbed or diffuse-reflected and thereby the light amount decreases. Images photographed by the first camera 107 and the second camera 110 are digitally processed and treated as light amount data on pixel by pixel basis. A computer determines the size and shape of a defect portion namely a dark portion or a bright portion corresponding to these data.

Now, the luminous intensity of a beam that reaches each portion of the conventional visual inspection apparatus will be described on the basis of a beam emitted from the light source 101. Although the luminous intensity of each portion of the visual inspection apparatus is affected by the reflectance of the optical disc 100, in the following description, it is assumed that the reflectance of the disc is 100 %. A beam reaches the lens 105 through the light source 101 and the lens 102. Before the beam reaches the lens 105, the luminous intensity of the beam is nearly 100 % of the beam of the light source 101. The beam is split into two beams by the beam splitter 106. Thus, a beam whose luminous intensity is nearly 50 % of the beam of the light source 101 reaches the first camera 107. A half of the beam that has traveled to the mirror 108 is blocked by the aperture 109. Thus, a beam whose luminous intensity is nearly 25 % of the beam of the light source 101 reaches the second camera 110.

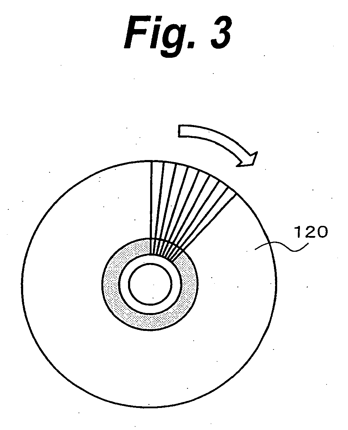

After one line of the optical disc 100 has been photographed, the optical disc 100 is slightly rotated by a stepping motor or the like and the next one line is photographed. Fig. 3 shows a line-shaped area on the optical disc 100 to which a line-shaped beam is emitted. As the optical disc 100 is rotated, the line-shaped area to which the line-shaped beam is emitted is successively moved in the rotation direction. The line-shaped beam is basically emitted to an inspection area (data area) 120 on the optical disc 100. The beam emission and photographing are repeated until the optical disc 100 is rotated for one turn. As a result, an image generated corresponding to the light amounts detected by the first camera 107 and the second camera 110 represents the whole optical disc 100.

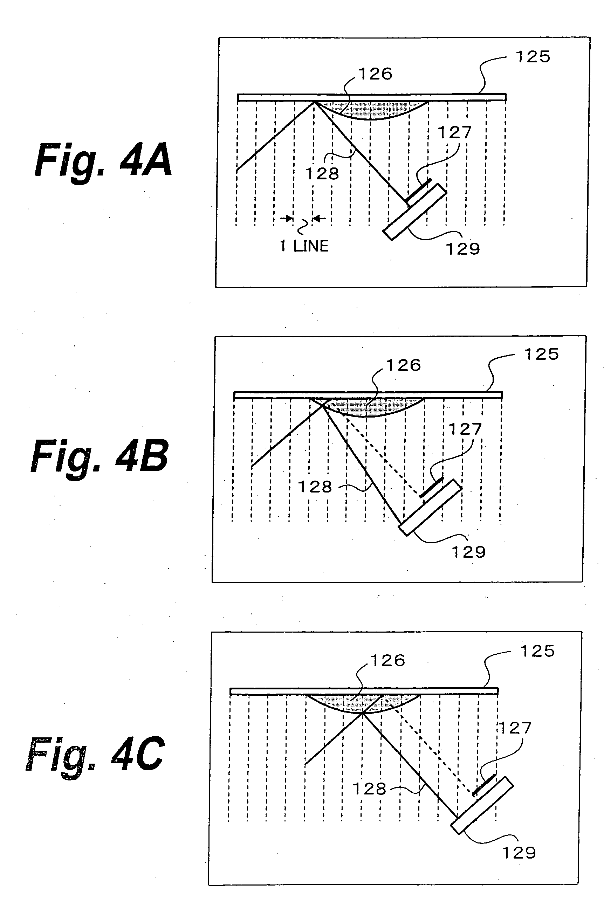

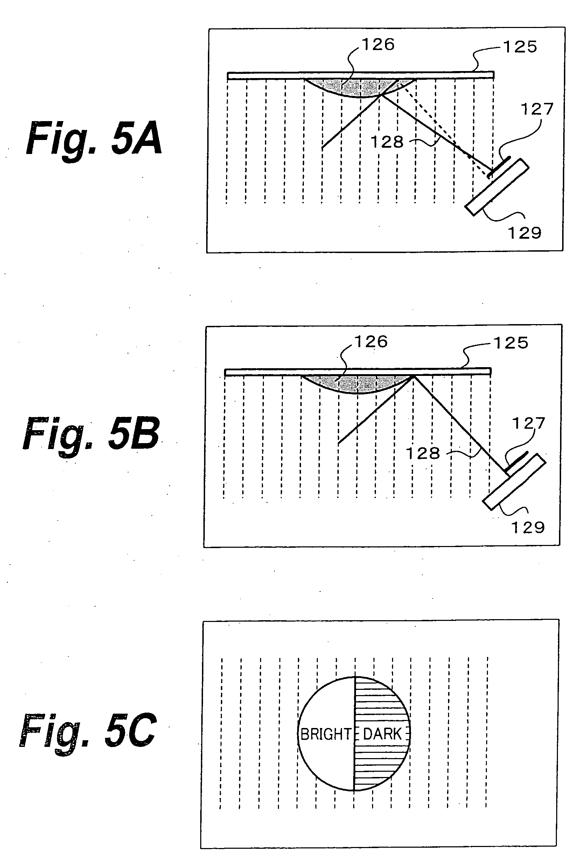

The aperture 109 and the second camera 110 mainly have a function for detecting unevenness of the optical disc 100. On the other hand, the first camera 107 detects dust or the like on the front surface and the reflection surface of the optical disc. Next, with reference to Fig. 4 and Fig. 5, a method of detecting unevenness of the front surface of the optical disc 100 using the aperture 109 and the second camera 110 will be described.

Fig. 4A to Fig. 5B show a sequence of operations of which a line CCD 129 reads the front surface of an optical disc 125 that has unevenness 126 one line by line basis. Fig. 5C shows an image obtained after the sequence of operations has been completed. Each line shown in Fig. 5C corresponds to each line shown in Fig. 4A to Fig. 5B.

Unevenness on the optical disc occurs due to foam interposed between substrates that are adhered or dust admixed therebetween. Fig. 4A shows a state of which the unevenness 126 on the optical disc 125 is being scanned. A beam 128 reflected on a flat portion of the optical disc 125 reaches the line CCD 129. An aperture 127 blocks a nearly half of the incident beam.

Thereafter, the optical disc 125 is further scanned. The incident beam is reaching an edge portion of the unevenness 126. This state is shown in Fig. 4B. The beam 128 is reflected as shown in Fig. 4B at an angle that is different from a regular reflection angle shown in Fig. 4A because of an inclination of the unevenness 126. The reflected beam reaches the line CCD 129.

Thereafter, the optical disc 125 is further scanned as shown in Fig. 4C. The incident beam reaches the center portion of the unevenness 126. The portion to which the incident beam is emitted is nearly flat. Thus, the beam reflected from the center portion of the unevenness 126 is nearly in parallel with the beam reflected from the optical disc. The beam reflected from the center portion of the unevenness 126 reaches the line CCD 129.

Thereafter, the incident beam approaches the other edge of the unevenness 126. This state is shown in Fig. 5A. Since the beam 128 is reflected at a larger reflection angle than that of the flat optical disc as shown in Fig. 5A because of an inclination of the unevenness 126. As a result, the reflected beam is blocked by the aperture 127. Thus, the reflected beam 128 does not reach the line CCD 129. The state of which the reflected beam 128 does not reach the line CCD 129 continues after the state shown in Fig. 4C immediately before the state shown in Fig. 5B.

In the state shown in Fig. 5B, the incident beam passes through the unevenness 126. Thereafter, the incident beam is reflected at the regular reflection angle. As a result, the reflected beam 128 reaches the line CCD 129.

After the sequence of operations of which the optical disc 125 is scanned shown in Fig. 4A to Fig. 5B has been completed, an image of the optical disc 125 is read by the line CCD 129 as shown in Fig. 5C. In other words, the first scanned portion of the unevenness 126 is bright, whereas the last scanned portion of the unevenness 126 is dark due to the presence of the aperture 127. With this image, it can be easily determined whether there is unevenness on the front surface of the optical disc.

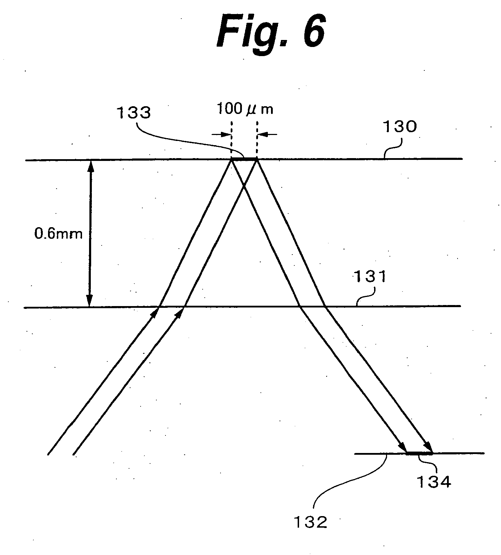

Next, an example of which a defect such as dust is photographed by the first camera 107 (that functions as an image sensor like the line CCD) of the conventional visual inspection apparatus will be described. Fig. 6 is a schematic diagram showing an example of which a one-layer type DVD is photographed by a conventional visual inspection apparatus. The one-layer type DVD has a structure of which two 0.6 mm thick substrates are adhered. Thus, the one-layer type DVD has a thickness of 1.2 mm. The distance between an information reading surface 131 and a reflection surface 130 is 0.6 mm. The information reading surface 131 is the front surface of the optical disc. The reflection surface 130 is a pit-formed surface of the optical disc. A two-layer type DVD (referred to as DVD-9 of which data are read from one side) has two substrates each having a reflection layer and a light semi-transmission layer. An intermediate layer having a thickness of 40 to 70 µm is interposed between the two substrates that are adhered.

Fig. 6 shows a one-layer type DVD. A two-layer type DVD is inspected in the same manner. In the case of the two-layer type DVD, pits on the first layer and pits on the second layer can be separately read by adjusting a focal distance of a lens. Thus, in the following, only the one-layer type DVD will be exemplified.

A line-shaped beam that has been reached from the information reading surface 131 is reflected on a reflection surface 130. Thereafter, the reflected line-shaped beam passes through the information reading surface 131. Thereafter, the line-shaped beam is detected by the line CCD 132. Assuming that a 100 µm wide defect 133 exists on the reflection surface 130, the light amount of the beam reflected from the defect portion is small. Thus, the light amount of the beam detected by the CCD 132 is small. As a result, in an image photographed by the CCD 132, a portion corresponding to a defect 133 appears as a dark real image 134. In the drawing, a surface denoted as the line CCD 132 represents a surface on which a reflected beam is projected.

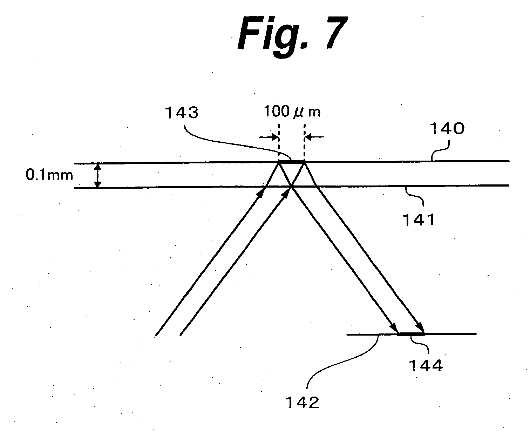

Fig. 7 is a schematic diagram showing an example of which a BD standard optical disc is inspected by a conventional visual inspection apparatus. In the BD standard, the thickness of a transparent protection layer (hereinafter referred to as the cover layer) is 0.1 mm, the thickness of the whole disc is 1.2 mm, and the distance between an information reading surface 141 and a reflection surface 140 is around 0.1 mm. Assuming that a 100 µm wide defect 143 exists on the reflection surface 140, the light amount of the beam reflected from the defect 143 is small. Thus, the light amount of the beam detected by a line CCD 142 is small. As a result, a portion corresponding to the defect 143 appears as a dark real image 144.

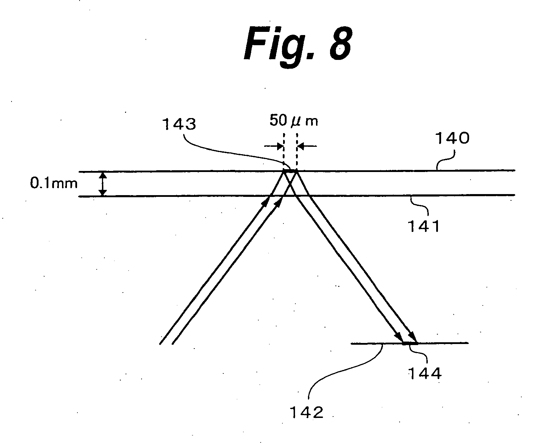

Fig. 8 is a schematic diagram showing an example of which a BD standard optical disc is inspected by a conventional visual inspection apparatus. As described above, the thickness of the cover layer is around 0.1 mm. Assuming that a 50 µm wide defect 143 exists on the reflection surface 140, the light amount of the beam reflected from the defect portion is small. Thus, the light amount of the beam detected by the line CCD is small. As a result, in a photographed image, a portion corresponding to the defect 143 appears as a dark real image 144.

In Japanese Patent Application Unexamined Publication No. HEI 9-257720, a method and apparatus for inspecting a defect on an optical disc is described. In the method and apparatus, like the structure shown in Fig. 1, a line-shaped beam is obliquely emitted to an optical disc. A beam reflected from the optical disc and a beam transmitted from the optical disc are detected by a line sensor.

However, when a relatively large defect exists on the information reading surface of the BD standard disc, which has a cover layer whose thickness is around 0.1 mm and thereby the distance between the information reading surface and the reflection surface is small, the visual inspection apparatus that uses the oblique incident beam cannot accurately detect the defect.

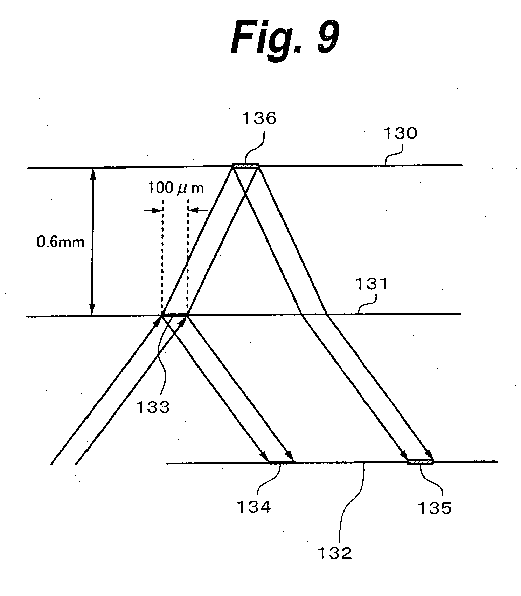

This problem will be described with reference to Fig. 9 to Fig. 12. Fig. 9 is a schematic diagram showing an example of which a one-layer type DVD is inspected by a conventional visual inspection apparatus. As described above, since the distance between a reflection surface 130 on which pits have been formed and an information reading surface 131 is 0.6 mm. Assuming that a 100 µm wide defect 133 exists on the information reading surface 131, the defect 133 is reflected on the information reading surface 131 and a real image 134 is projected to a CCD 132. In addition, a shadow 136 of the defect 133 occurs on the reflection surface 130. The shadow 136 is reflected on the reflection surface 130. As a result, a virtual image 135 is projected to the line CCD 132.

When the defect 133 exists on the information reading surface 131, the line CCD 132 detects two images of the real image 134 and the virtual image 135 because a beam is obliquely emitted to the optical disc. On the other hand, as shown in Fig. 6, when the defect 133 exists on the reflection surface 130, the line CCD 132 detects only one image, namely the real image 134. Thus, it can be determined whether a defect exists on the information reading surface 131 or the reflection surface 130 depending on how many images corresponding to the defect are detected. In addition, the real image 134 and the virtual image 135 are projected to the line CCD 132 with a relatively large distance because the distance between the reflection surface 130 and the information reading surface 131 is as large as 0.6 mm.

A defect may exist between the information reading surface 131 and the reflection surface 130. In this case, the distance between the real image 134 and the virtual image 135 on the line CCD 132 is small. Thus, by measuring the distance between the real image 134 and the virtual image 135, it can be determined how far the defect is apart from the reflection surface 130.

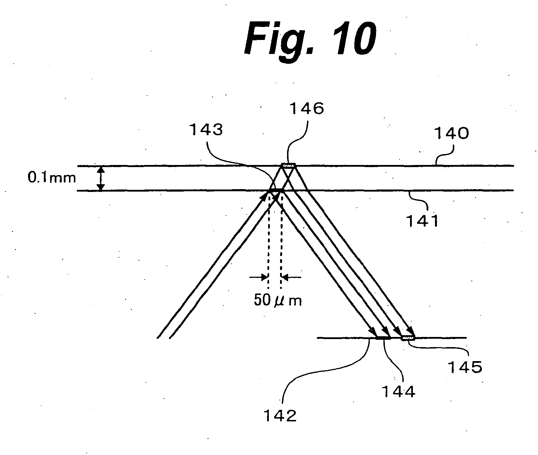

Fig. 10 is a schematic diagram showing another example of which a BD standard optical disc is inspected by a conventional visual inspection apparatus. Like the foregoing example, the thickness of the cover layer is around 0.1 mm. Assuming that a 50 µm wide defect 143 exists on an information reading surface 141, an incident beam is reflected on the information reading surface 141 and a real image 144 is formed on a line CCD 142. In addition, a shadow 146 of the defect 143 occurs on a reflection surface 140. The shadow 146 is reflected on the reflection surface 140. As a result, a virtual image 145 is projected to the line CCD 142.

Unlike the example shown in Fig. 9, the dark image 144 and the virtual image 145 appear at relatively close positions because the distance between the reflection surface 140 and the information reading surface 141 is as small as 0.1 mm unlike the DVD.

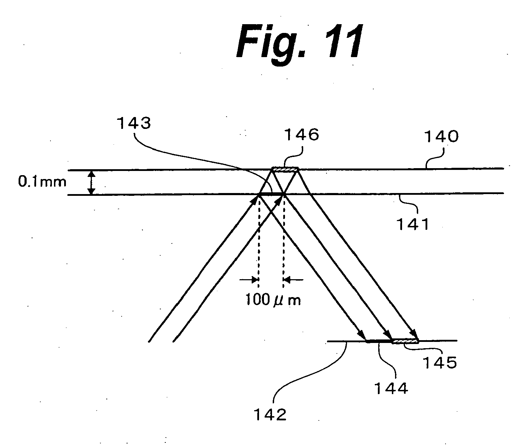

Fig. 11 is a schematic diagram showing another example of which a BD standard optical disc is inspected by a conventional visual inspection apparatus. As described above, the thickness of the cover layer is around 0.1 mm. In this example, a 100 µm wide defect 143 exists on an information reading surface 141. The defect 143 is reflected on the information reading surface 141 and a real image 144 is projected to a line CCD 142. A shadow 146 of the defect 143 occurs on a reflection surface 140. The shadow 146 is reflected on the reflection surface 140. As a result, an virtual image 145 is projected to the line CCD 142.

In this case, the real image 144 and the virtual image 145 closely appear as one image on the line CCD 142 because a beam is obliquely reached from a light source, the thickness of the cover layer is as small as around 0.1 mm, and the size of the defect 143 is large.

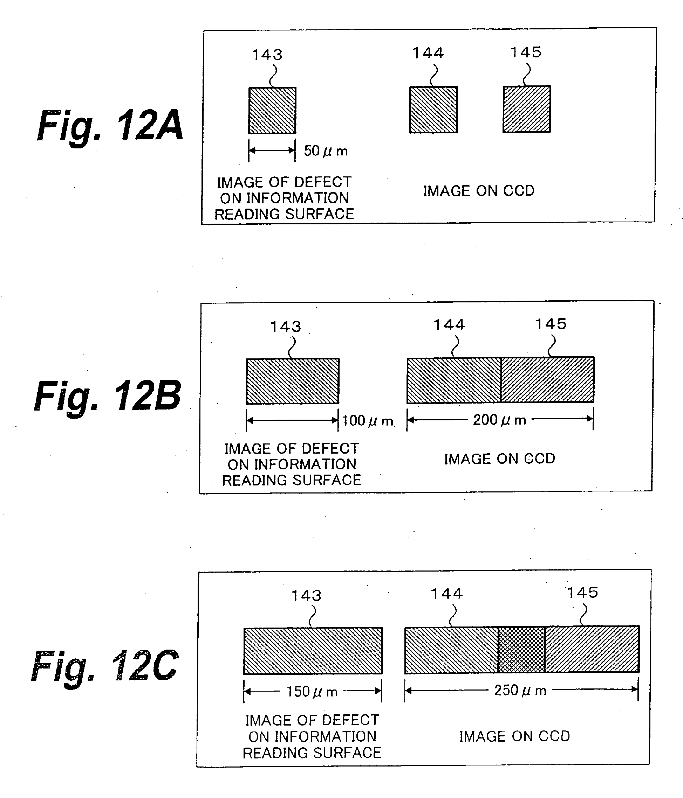

Next, with reference to Fig. 12, how defects of various sizes on an optical disc 140 to be inspected are detected as images on a line CCD will be described.

Fig. 12A shows an example of which when a 50 µm wide defect 143 exists on an information reading surface, a 50 µm wide real image 144 corresponding to the defect 143 and a 50 µm wide virtual image 145 corresponding to the defect 143 appear as images on a line CCD and the two images are apart from by a predetermined distance. This example is the same as that shown in Fig. 10. Since a space exists between the real image 144 and the virtual image 145, they are detected as different images that have the same size as the defect 143 in the later processes.

Fig. 12B shows an example of which when a 100 µm wide defect 143 exists on an information reading surface, a 100 µm wide real image 144 corresponding to the defect 143 and a 100 µm wide virtual image 145 corresponding to the defect 143 appear as images on a line CCD and the two images contact each other. This example is the same as that shown in Fig. 11. Since the real image 144 and the virtual image 145 contact each other, they are connected and detected as a 200 µm wide image.

Fig. 12C shows an example of which when a 150 µm wide defect 143 exists on an information reading surface, a 150 µm wide real image 144 corresponding to the defect 143 and a 150 µm wide virtual image 145 corresponding to the defect 143 appear as images on a line CCD and they overlap with each other. The overlapped portion of these images is 50 µm wide. Since they overlap, they are detected as one image. The size of the detected image is 250 µm.

As are clear from Fig. 12B and Fig. 12C, in these examples, when a defect larger than 100 µm exists on the information reading surface, an image larger than the defect appears on the line CCD because of the presence of a virtual image and the image is detected as one defect. Thus, when the permissible size of a defect is for example up to 150 µm, even if the size of the real defect is in the range from 100 µm to 150 µm, since a conventional visual inspection apparatus unifies a real image and a virtual image and determines the defect as an image larger than the defect. Thus, a good product that has such a defect is finally determined to be a no-good product. The incorrect determination results in preventing proper quality control and thereby increasing the production cost.

Therefore, an object of the present invention is to provide a visual inspection apparatus that accurately determines the size of a defect that is relatively large and that exists on an information reading surface of an optical disc having a thin transparent protection layer for a BD standard optical disc.

### Disclosure of the Invention

The present invention is a visual inspection apparatus, comprising at least one beam splitter that receives a line-shaped collimated beam, splits the line-shaped collimated beam into a first line-shaped collimated beam and a second line-shaped collimated beam, and vertically emits the first line-shaped collimated beam to a line-shaped area on a front surface of an inspection object; a first image sensor that receives a first reflected beam of the first line-shaped collimated beam reflected in the line-shaped area; at least one mirror that obliquely emits the second line-shaped collimated beam to the line-shaped area on the front surface of the inspection object; and a second image sensor that receives a second reflected beam of the second line-shaped collimated beam reflected in the line-shaped area.

According to the present invention, in addition to a beam that obliquely reaches a front surface of an optical disc, a beam that vertically reaches the front surface of the optical disc is provided. The light amounts of these reflected beams are detected by image sensors. Thus, even if a relatively large defect exists on an information reading surface of an optical disc having a thin cover layer such as a BD standard optical disc, the defect can be accurately detected.

### Brief Description of Drawings

Fig. 1 is a perspective view describing the theory of a visual inspection.
Fig. 2 is a schematic diagram showing a structure of a conventional visual inspection apparatus.
Fig. 3 is a schematic diagram showing a relationship between an optical disc and a beam emitted thereon.
Fig. 4 is a schematic diagram showing a sequence of operations for detecting unevenness using an aperture.
Fig. 5 is a schematic diagram showing a sequence of operations for detecting unevenness using an aperture.
Fig. 6 is a schematic diagram showing an example of which a defect is inspected by a conventional visual inspection apparatus.
Fig. 7 is a schematic diagram showing another example of which a defect is inspected by a conventional visual inspection apparatus.
Fig. 8 is a schematic diagram showing another example of which a defect is inspected by a conventional visual inspection apparatus.
Fig. 9 is a schematic diagram showing another example of which a defect is inspected by a conventional visual inspection apparatus.
Fig. 10 is a schematic diagram showing another example of which a defect is inspected by a conventional visual inspection apparatus.
Fig. 11 is a schematic diagram showing another example of which a defect is inspected by a conventional visual inspection apparatus.
Fig. 12 is a schematic diagram showing how an image is formed on a CCD depending on the size of a defect.
Fig. 13 is a schematic diagram showing a structure of a visual inspection apparatus according to a first embodiment of the present invention.
Fig. 14 is a schematic diagram showing an example of which a defect is inspected by the visual inspection apparatus according to the first embodiment of the present invention.
Fig. 15 is a schematic diagram showing another example of which a defect is inspected by the visual inspection apparatus according to the first embodiment of the present invention.
Fig. 16 is a schematic diagram showing a structure of a visual inspection apparatus according to a second embodiment of the present invention.

### Best Modes for Carrying out the Invention

Next, with reference to the accompanying drawings, embodiments of the present invention will be described.

According to the present invention, in addition to a beam that obliquely reaches a front surface of an inspection object, a beam that vertically reaches the front surface of the inspection object is used to detect a defect that exists thereon. In addition, to provide beams that obliquely and vertically emit the front surface of the inspection object, a beam emitted from a light source is split by a beam splitter. Thus, two systems of optical paths are provided. As a result, the problem of the conventional visual inspection apparatus is solved.

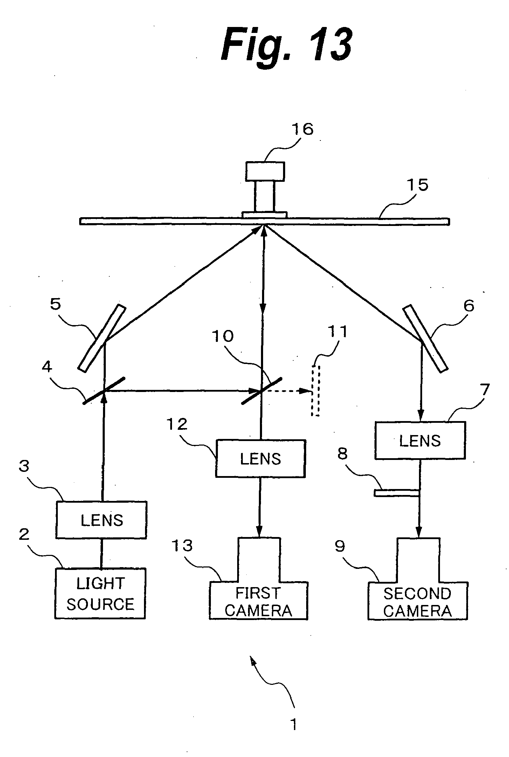

First of all, with reference to Fig. 13, a structure of a visual inspection apparatus 1 according to a first embodiment of the present invention will be described. The visual inspection apparatus 1 has a light source 2, lenses 3, 7, and 12, beam splitters 4 and 10, mirrors 5 and 6, an aperture 8, a first camera 13, a second camera 9, and a disc drive device 16. The disc drive device may be disposed below the lower surface of the disc.

A beam that travels from the beam splitter 4 to the beam splitter 10 and a BD standard optical disc (hereinafter referred to as the optical disc) 15 corresponds to a first line-shaped collimated beam. A beam that successively travels as a reflected beam of the first line-shaped collimated beam from the optical disc 15 to the beam splitter 10, the lens 12, and the first camera 13 corresponds to a first reflected beam. A beam that successively travels from the beam splitter 4 to the mirror 5 and the optical disc 15 corresponds to a second line-shaped collimated beam. A beam that successively travels as a reflected beam of the second line-shaped collimated beam to the optical disc 15, the mirror 6, the lens 7, the aperture 8, and the second camera 9 corresponds to a second reflected beam.

The beam splitter 4 corresponds to a first beam splitter. The beam splitter 10 corresponds to a second beam splitter. The mirrors 5 and 6 correspond to a mirror.

The light source 2 is a conventional light source such as a halogen lamp or a red LED. A beam emitted from the light source 2 diffuses. The lens 3 collimates the beam emitted from the light source 2. The beam reaches the beam splitter 4 having an angle of 45° against the optical path. The beam emitted from the light source 2 is collimated so that the beam does not diffuse, but has a large luminous intensity. The collimated beam needs to be nearly collimated, not exactly collimated.

50 % of the beam that has reached the beam splitter 4 is reflected. The reflected beam travels to the beam splitter 10. The remaining 50 % of the beam travels to the mirror 5. A half of the beam that has reached the beam splitter 10 is reflected. The reflected beam vertically reaches the optical disc 15. The remaining 50 % of the beam reaches for example a light absorption blackout sheet 11. The light absorption blackout sheet 11 absorbs the beam. A beam reflected from the optical disc 15 reaches the first camera 13 through the beam splitter 10 and the lens 12. The first camera 13 forms an image. The luminous intensity of the beam emitted to the optical disc 15 is 25 % of the luminous intensity of the beam emitted from the light source 2 because the beam passes through the beam splitter 4 and the beam splitter 10 one time each. On the other hand, the luminous intensity of the beam that reaches the first camera 13 is 12.5 % of the luminous intensity of the beam emitted from the light source 2 because the beam passes through the beam splitter 4 one time and the beam splitter 10 two times.

The lens 12 and a lens of the first camera 13 as a pair compose a telecentric lens. A lens has an angle of field that represents a photographable range as an angle. The angle of field is an angle between the two directions opposed to each other over the beam axis. In a conventional lens system, since it has a predetermined angle of field, when two objects that are apart from each other and that have a relationship of near and far objects are photographed, an object near to the lens appears more largely than an object that is far from the lens. This phenomenon is not suitable when objects are accurately measured.

The telecentric lens is largely different from a conventional lens in that the angle of field is close to 0°. With the telecentric lens, the size and position of an object can be accurately measured regardless of how far the object is apart from the lens.

The beam that has passed through the beam splitter 4 has a luminous intensity of 50 % of the beam emitted from the light source. The beam that has passed through the beam splitter 4 is reflected by the mirror 5. The beam obliquely reaches the optical disc 15. A beam reflected by the optical disc 15 reaches the mirror 6. Like the conventional visual inspection apparatus, the angle of field may be set at around 30° to 45°. A beam that has reached the mirror 6 passes through the lens 7. A half of the beam is blocked by the aperture 8. The rest of the beam reaches the second camera 9. The second camera 9 forms an image. Thus, a beam whose luminous intensity is 25 % of the beam emitted from the light source 2 reaches the second camera 9. In this case, the lens 7 and a lens of the second camera 9 as a pair compose a telecentric lens.

After one line of the optical disc 15 has been photographed, the optical disc 15 is slightly rotated by the disc drive device 16 composed of a stepping motor or the like so that the line-shaped collimated beam is emitted to the adjacent line and it is photographed. In this manner, beam emission and photographing are repeatedly performed until the optical disc 15 is rotated for one turn. The optical disc 15 is rotated about the same axis as data are recorded and reproduced.

In the structure of the present invention, the first camera 13 can vertically photograph the optical disc 15 as an inspection object. Thus, a photographed image of a defect is always a real image. As a result, the size of a defect can be correctly obtained. On the other hand, a reflected beam of a beam that has obliquely reached the optical disc 15 reaches the second camera 9. Thus, like the conventional visual inspection apparatus, unevenness of the front surface of the optical disc can be effectively photographed and detected.

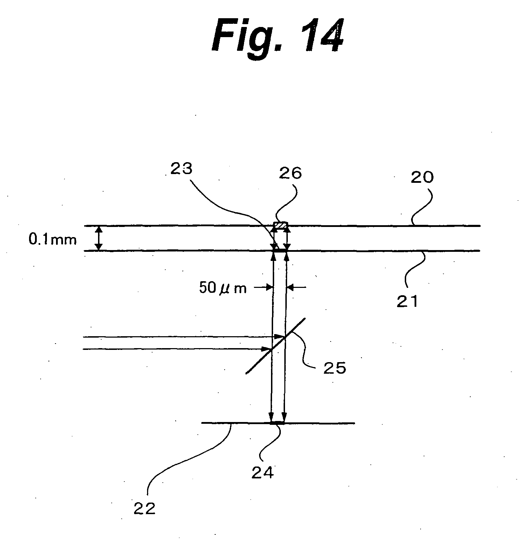

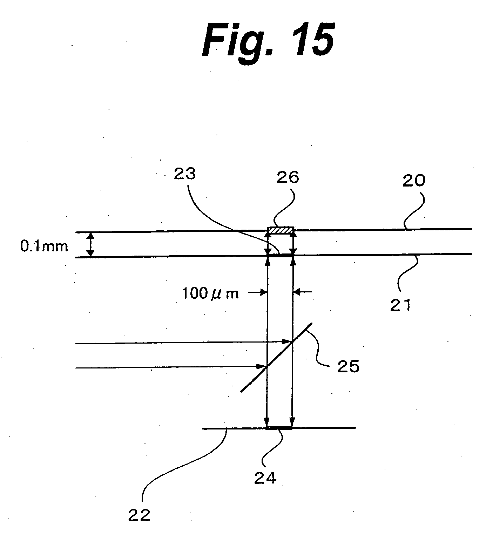

When the optical disc 15 is vertically photographed, only a real image is obtained, but a virtual image is not generated. Next, with reference to Fig. 14 and Fig. 15, this theory will be described. Fig. 14 shows an example of which a 50 µm wide defect exists on an information reading surface 21 of an optical disc 15. A beam emitted from a light source 2 is reflected by a beam splitter 25. 50 % of the beam vertically reaches the optical disc 15. The incident beam is reflected by the information reading surface 21 and a reflection surface 20. The reflected beam passes through the beam splitter 25 and reaches a line CCD 22. As a result, a real image 24 corresponding to a defect 23 is projected to the line CCD 22.

A shadow 26 of the defect 23 on the reflection surface 20 is projected to the same area as the real image 24 reflected from the information reading surface 21. Thus, a virtual image is not formed unlike with the virtual image 145 shown in Fig. 10.

Fig. 15 shows an example of which a 100 µm wide defect exists on an information reading surface 21 of an optical disc 15. A beam emitted from a light source 2 is reflected by a beam splitter 25. 50 % of the beam emitted from the light source 2 vertically reaches the optical disc 15. The incident beam is reflected on the information reading surface 21 and a reflection surface 20. The reflected beam passes through the beam splitter 25 and reaches a line CCD 22. As a result, a real image 24 corresponding to the defect 23 is projected to the line CCD 22.

Like the example shown in Fig. 14, in this example, no virtual image is formed unlike the virtual image 145 shown in Fig. 11. In the example shown in Fig. 11, with the virtual image 145, the size of the defect is mistakenly detected. However, according to the foregoing embodiment of the present invention, the size of the defect is not mistakenly detected.

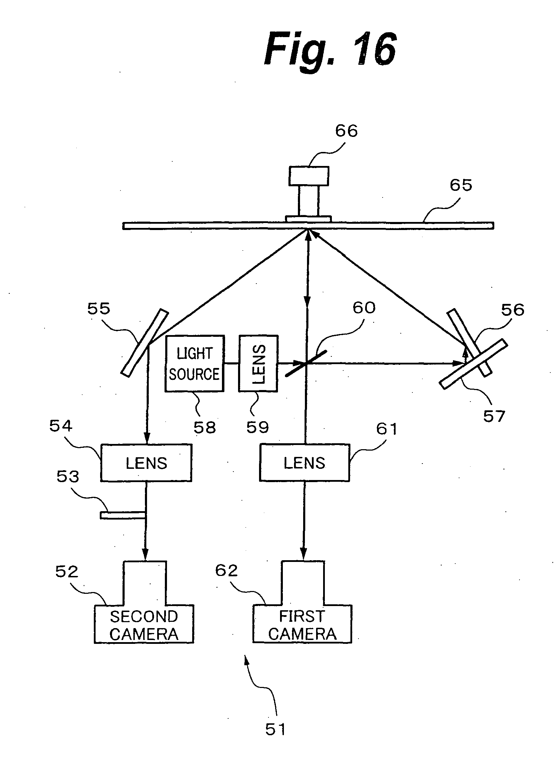

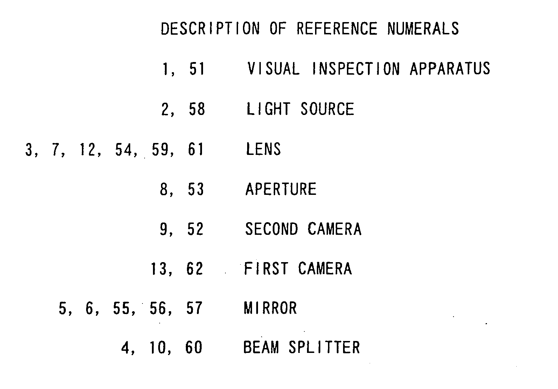

Next, with reference to Fig. 16, a structure of a second embodiment of the present invention will be described. According to the second embodiment, the luminous intensity of an incident beam of a first camera is increased and thereby S/N ratio (Signal to Noise ratio) is improved. As a result, the defect detection capability is improved. In addition, since the luminance intensity is high, the exposure time of the first camera is shortened. As a result, the inspection time can be shortened.

A visual inspection apparatus according to the second embodiment has a light source 58, lenses 54, 59, and 61, a beam splitter 60, mirrors 55, 56, and 57, an aperture 53, a first camera 62, a second camera 52, and a disc drive device 66.

A beam that travels from the beam splitter 60 to a optical disc 65 corresponds to a first line-shaped collimated beam. A beam that successively travels as a reflected beam of the firs line-shaped collimated beam from the optical disc 65 to the beam splitter 60, the lens 61, and the first camera 62 corresponds to a first reflected beam. A beam that successively travels from the beam splitter 60 to the mirror 57, the mirror 56, and the optical disc 65 corresponds to a second line-shaped collimated beam. A beam that successively travels as a reflected beam of the second line-shaped collimated beam to the optical disc 65, the mirror 55, the lens 54, the aperture 53, and the second camera 52 corresponds to a second reflected beam. The mirrors 57 and 56 and the mirror 55 correspond to a mirror.

A beam is emitted from the light source 58 to the beam splitter 60 through the lens 59. 50 % of the beam is reflected by the beam splitter 60. The reflected beam vertically reaches the optical disc 65. The remaining 50 % of the beam passes through the beam splitter 60 and travels to the mirror 57.

A beam reflected by the beam splitter 60 is vertically reflected by the optical disc 65. The reflected beam successively passes through the beam splitter 60 and the lens 61 and then travels to the first camera 62. The first camera 62 forms a image. Since the beam that reaches the first camera 62 has passed through the beam splitter 60 two times, the luminance intensity of the beam is 25 % of the beam emitted from the light source 58. The luminance intensity of the beam that reaches the first camera 62 is two times of 12.5 % of that of the first embodiment.

In addition, the lens 61 and a lens of the first camera 62 as a pair compose a telecentric lens.

The beam that has passed through the beam splitter 60 and traveled to the mirror 57 has a luminous intensity of 50 % of the beam emitted from the light source 58. This beam is reflected by the mirror 57 and the mirror 56. The reflected beam obliquely reaches the optical disc 65. The beam reflected on the optical disc 15 reaches the mirror 55. Like the conventional visual inspection apparatus, the incident angle of the beam to the optical disc 15 is in the range from 30° to 45°. The beam that has reached the mirror 55 passes through the lens 54 and travels to the aperture 53. The aperture 53 blocks a half of the beam. The rest of the beam reaches the second camera 52. The second camera 52 forms an image. The lens 54 and a lens of the second camera 52 as a pair compose a telecentric lens.

In this structure, the luminance intensity of the beam that has reached the first camera 62 is larger than that of the first embodiment. In the conventional visual inspection apparatus, a beam having a luminous intensity of 50 % of the beam emitted from the light source 101 reaches the first camera 107. However, the beam having a luminous intensity of 50 % of the beam emitted from the light source 101 allows a defect to be sufficiently photographed. Thus, it is thought that a beam having a luminous intensity of 25 % of the beam emitted from the light source is sufficient like the second embodiment. In addition, according to the second embodiment, one beam splitter is used instead of two. In addition, the optical absorption blackout sheet is omitted.

After one line-shaped area of the optical disc 65 has been photographed, the optical disc 65 is slightly rotated by the disc drive device composed of a stepping motor or the like so that the line-shaped collimated light is emitted to the adjacent line-shaped area and it is photographed. In this manner, beam emission and photographing are repeated until the optical disc 65 is rotated for one turn.

In each of the visual inspection apparatuses according to the first embodiment and the second embodiment, a beam vertically reaches the front surface of the optical disc 15, 65 and the reflected beam is photographed. Thus, other than the lenses 12 and 61 and the beam splitters 10 and 60 cannot be disposed on a line that connects a beam emission line on the front surface of the optical disc 15, 65 and the first camera 13, 62. The light source 2, 58, the second camera 9, 52, and so forth can be disposed in this condition.

The beam splitter 60 is one of various types that differ in reflection/transmission ratio (R/T ratio). When a proper type of the beam splitter 60 is used corresponding to the capabilities of the first camera 62 and the second camera 52, the distribution of the light amounts to the first camera 62 and the second camera 52 can be adjusted.

In this example, to reduce the space of the apparatus, the mirror 56 and the mirror 57 are used. To reduce the number of parts of the apparatus, one mirror may be used instead of the mirrors 56 and 57.

In the foregoing embodiments of the present invention, visual inspection apparatuses that visually inspect a BD standard optical disc were described. Instead, these visual inspection apparatuses may be used to inspect conventional CD and DVD. In addition, these visual inspection apparatuses can be used to inspect other types of optical discs. Moreover, these visual inspection apparatuses can be used to visually inspect various types of record mediums having various shapes rather than a circular shape like optical discs.

For example, the visual inspection apparatuses according to the present invention can be used to visually inspect a tape-shaped record medium. In this case, it is necessary to dispose feeding means such as a winding roller that winds a record medium and a feeding roller that nips and feeds the record medium instead of the disc drive device 16, 66.

In the embodiments of the present invention, an optical disc is photographed by a line CCD. Instead, the optical disc may be photographed by another type of a line sensor such as a MOS (Metal Oxide Semiconductor) type image sensor or a CMOS (Complementary Metal Oxide Semiconductor) sensor. In addition, according to the present invention, a reflected beam of a line-shaped incident beam is photographed by a line CCD corresponding to the shape of the beam. Instead, as long as a condition for the shape of an incident beam and a condition for a process of a photographed image are satisfied, a two-dimensional sensor may be used.

## Claims

1. A visual inspection apparatus, comprising:
at least one beam splitter that receives a line-shaped collimated beam, splits the line-shaped collimated beam into a first line-shaped collimated beam and a second line-shaped collimated beam, and vertically emits the first line-shaped collimated beam to a line-shaped area on a front surface of an inspection object;
a first image sensor that receives a first reflected beam of the first line-shaped collimated beam reflected in the line-shaped area;
at least one mirror that obliquely emits the second line-shaped collimated beam to the line-shaped area on the front surface of the inspection object; and
a second image sensor that receives a second reflected beam of the second line-shaped collimated beam reflected in the line-shaped area.

2. The visual inspection apparatus as set forth in claim 1,
wherein the line-shaped collimated beam received by the beam splitter is generated by a first lens that receives a beam emitted from a light source.

3. The visual inspection apparatus as set forth in claim 1, further comprising:
a second lens that receives the first reflected beam before the first image sensor receives the first reflected beam,
wherein the first image sensor has a third lens, and
wherein the second lens and the third lens compose a telecentric lens.

4. The visual inspection apparatus as set forth in claim 1, further comprising:
a fourth lens that receives the second reflected beam before the second image sensor receives the second reflected beam,
wherein the second image sensor has a fifth lens, and
wherein the fourth lens and the fifth lens compose a telecentric lens.

5. The visual inspection apparatus as set forth in claim 4, further comprising:
an aperture that blocks a part of the second reflected beam before the second image sensor receives the second reflected beam.

6. The visual inspection apparatus as set forth in claim 1,
wherein the number of the at least one beam splitter is one,
wherein a beam reflected by the beam splitter is the first line-shaped collimated beam, and
wherein a beam that is transmitted by the beam splitter is the second line-shaped collimated beam.

7. The visual inspection apparatus as set forth in claim 1,
wherein the at least one beam splitter is a first beam splitter and a second beam splitter,
wherein a beam reflected by the first beam splitter is received by the second beam splitter and a beam that is transmitted by the first beam splitter is the second line-shaped collimated beam, and
wherein a beam reflected by the second beam splitter is the first line-shaped collimated beam.

8. The visual inspection apparatus as set forth in claim 1,
wherein the inspection object is an optical disc,
wherein the first line-shaped collimated beam and the second line-shaped collimated beam are emitted to one part of the line-shaped area in a radius direction of the disc, and
wherein each of the first image sensor and the second image sensor is composed of a line sensor.

9. The visual inspection apparatus as set forth in claim 8, further comprising:
disc drive means for rotating the optical disc,
wherein the disc drive means rotates the optical disc so that the first line-shaped collimated beam and the second line-shaped collimated beam are emitted to an adjacent part of the line-shaped area of the optical disc after the first image sensor photographs the received first reflected beam and the second image sensor photographs the received second reflected beam.

10. The visual inspection apparatus as set forth in claim 1,
wherein the inspection object is a tape-shaped record medium,
wherein the first line-shaped collimated beam and the second line-shaped collimated beam are emitted to one part of the line-shaped area perpendicular to a longitudinal direction of the record medium, and
wherein each of the first image sensor and the second image sensor is composed of a line sensor.

11. The visual inspection apparatus as set forth in claim 10, further comprising:
feeding means for feeding the record medium,
wherein the feeding means moves the record medium so that the first line-shaped collimated beam and the second line-shaped collimated beam are emitted to an adjacent part of the line-shaped area of the record medium after the first image sensor photographs the received first reflected beam and the second image sensor photographs the received second reflected beam.
